# EUROPÄISCHE PATENTSCHRIFT

(11) **EP 3 342 006 B1**
(45) Veröffentlichungstag und Bekanntmachung des Hinweises auf die Patenterteilung: **03.08.2022**
(21) Anmeldenummer: 16754505.2
(22) Anmeldetag: 23.08.2016
(51) Int. Cl.: H01R 13/52, H01R 13/58, H01R 13/504, H01R 13/59

(54) **ELEKTRISCHE KABELBAUGRUPPE**
ELECTRIC CABLE SUBASSEMBLY
ENSEMBLE DE CÂBLES ÉLECTRIQUES

(30) Priorität: 27.08.2015 DE 102015114289; 12.02.2016 DE 102016102490
(43) Veröffentlichungstag der Anmeldung: 04.07.2018
(73) Patentinhaber: Phoenix Contact GmbH & Co. KG, 32825 Blomberg (DE)
(72) Erfinder: FRANKE, Jens, 31812 Bad Pyrmont (DE); GALLA, Stefan, 32584 Löhne (DE); SCHOLZ, Sebastian, 37671 Höxter (DE); SCHAEFERS, Martin, 33014 Paderborn (DE); SCHAEFER, Sebastian, 32825 Blomberg (DE); BECK, Andreas, 32696 Bega (DE); POTTHAST, Markus, 37696 Marienmünster (DE); GUTBROT, Valentin, 32657 Lemgo (DE)
(74) Vertreter: Blumbach · Zinngrebe Patentanwälte PartG mbB
(86) Internationale Anmeldenummer: PCT/EP2016/069865
(87) Internationale Veröffentlichungsnummer: WO 2017/032762

(56) Entgegenhaltungen:
- EP-A1- 1 564 858
- EP-A1- 1 764 870
- WO-A1-99/27551
- WO-A1-2012/012811
- DE-A1-102008 022 055
- DE-A1-102013 106 255
- DE-A1-102014 101 476
- DE-B3-102011 103 351
- DE-T5-112012 002 374
- DE-U1-202009 000 899
- DE-U1-202010 005 085
- US-A1- 2006 180 196

## Beschreibung

### Gebiet der Erfindung

Die Erfindung betrifft eine elektrische Kabelbaugruppe mit einem Verbinder, insbesondere eine Trunkleitungs-Kabelbaugruppe für eine Photovoltaik-Anlage, sowie eine Baugruppe aus einem Modulwechselrichter und der daran angeschlossenen Trunkleitungs-Kabelbaugruppe und eine Photovoltaik-Anlage mit einer Mehrzahl von Photovoltaik-Modulen und Modulwechselrichtern und einer wechselstromseitigen Verkabelung der Modulwechselrichter mit den Trunkleitungs-Kabelbaugruppen.

### Hintergrund der Erfindung

Für Photovoltaik-Anlagen werden im Außenbereich zunehmend elektrische Kabel mit einem Kabelmantel aus vernetztem Kunststoff verwendet. Diese Kunststoffe sind z.B. chemisch oder strahlenvernetzt. Kabel mit einem Kabelmantel aus einem vernetzten Kunststoff sind besonders robust und bieten im Außenbereich typischerweise eine höhere Lebensdauer als herkömmliche Kabel mit PVC-Mantel, z.B. gegen Einwirkung von Sonneneinstrahlung.

Typische Garantielaufzeiten von Photovoltaik-Modulen betragen 20 Jahre oder mehr. Daher sollen auch die verwendeten Kabelbaugruppen und zugehörige Verbinder entsprechend langlebig sein. Bislang werden Kabelverbindungsstellen häufig umspritzt, ggf. mehrfach, und es wird ein Haftvermittler eingesetzt. Alternativ wird ein hohles Kunststoffgehäuse verwendet, welches dann vergossen wird. Trotzdem haben vergossene oder umspritzte Verbindungsstellen von Kabeln mit einem Mantel aus vernetztem Kunststoff den Nachteil, dass der vernetzte Kunststoff des Kabelmantels typischerweise keine gute Verbindung mit der Vergussmasse bzw. der Umspritzmasse eingeht. Man könnte sagen, dass die Vergussmasse bzw. die Umspritzmasse nicht hinreichend am Kabelmantel "klebt". Dadurch besteht bei solchen Verbindungen unter anderem die Gefahr, dass Wasser eindringen kann, was nachteilige Auswirkungen auf das System haben kann. Ähnliche Schwierigkeiten können auch bei Kabelmänteln auftreten, deren Kunststoff zwar nicht vernetzt ist, welcher aber trotzdem keinen Haftverbund mit der Vergussmasse oder der Umspritzmasse eingeht.

Beim Umspritzen behandelt man den Kabelmantel typischerweise mit einem Haftvermittler, legt das Ganze nachfolgend in ein Spritzgusswerkzeug ein und umspritzt die Verbindungsstelle. Danach folgen zumeist noch ein weiterer oder mehrere weitere Umspritzprozesse. Ein Grund hierfür ist, dass große Masseanhäufungen der Kunststoffmasse vermieden werden sollen, welche zu Einfallstellen führen können und die Zykluszeit im Werkzeug erhöhen.

Beim Vergießen verwendet man typischerweise ein Gehäuse, welches z.B. einen Kabelabzweig umschließt. Danach wird der Hohlraum vergossen. Der Vergussprozess dauert sehr lange, da die Vergussmasse erst aushärten muss. Außerdem benötigt man ggf. zusätzliche Bauteile um Zugentlastung und Dichtigkeit sicherzustellen. Wenn die Zugentlastung des Kabels im Wesentlichen durch die Haftreibung der Vergussmasse auf der Aderisolierung und dem Kabelmantel bewerkstelligt wird, scheint dies nicht nur aus den vorgenannten Gründen nicht optimal zu sein.

Bei Photovoitaik-Verkabelungen werden typischerweise hohe Kabel-Auszugskräfte gefordert. Bestimmte Normen fordern z.B. Haltbarkeit gegen Kabelauszugskräfte von mindestens 156 N für Wechselrichterverbinder.

Bei Sunclix^{®} micon Artikeln der Anmelderin gewährleisten auf das Kabel gecrimpte Schellen eine ausreichende Zugentlastung. Dieses Konzept kann aber trotzdem hinsichtlich der Kosten und des Montageaufwands weiterentwickelt werden.

Aus der US 2006/0180196 A1 ist eine Verbindungsbox für die Ausgangsverkabelung von Solarmodulen bekannt, wobei die Verbindungsbox für die Gleichstromverkabelung ausgebildet ist.

Aus der DE 10 2008 022 055 A1 ist eine Anschlussdose für ein Solarmodul bekannt, welche zum Anschluss an die solarmodulseitiger Anschlussleitungen ausgebildet ist.

Aus der DE 11 2012 002374 T5 ist eine elektrische Kabelbaugruppe, nach dem Oberbegriff des Anspruchs 1, bekannt.

### Allgemeine Beschreibung der Erfindung

Es ist eine Aufgabe der vorliegenden Erfindung, eine elektrische Kabelverbindung zum Anschließen eines Modulwechselrichters bereitzustellen, welche eine hohe Lebensdauer der eingesetzten Komponenten mit einer guten Dichtigkeit und Zugfestigkeit, insbesondere für den Außeneinsatz an Photovoltaik-Anlagen kombiniert.

Ein weiterer Aspekt der Aufgabe ist es, eine solche Kabelverbindung bereitzustellen, welche eine hohe elektrische Spannungsfestigkeit, insbesondere für die bei größeren Photovoltaik-Anlagen auftretenden Spannungen gewährleistet, insbesondere über die gesamte Lebensdauer der Anlage.

Ein weiterer Aspekt der Aufgabe ist es, eine Kabelverbindung zum Anschließen eines Modulwechselrichters bereitzustellen, welche für Kabel mit einem Kabelmantel aus einem Kunststoff, welcher keinen Haftverbund mit Vergussmasse oder Umspritzmasse eingeht, insbesondere aus einem vernetzten Kunststoff geeignet ist.

Die Aufgabe der Erfindung wird durch den Gegenstand der unabhängigen Ansprüche 1 und 15 gelöst.

Vorteilhafte Weiterbildungen der Erfindung sind in den Unteransprüchen definiert.

Die erfindungsgemäße elektrische Kabelbaugruppe mit elektrischem Verbinder umfasst zumindest ein elektrisches Kabel mit einem Kabelmantel, insbesondere aus einem Kunststoff, welcher keinen Haftverbund mit Vergussmasse oder Umspritzmasse eingeht. Dies kann insbesondere ein vernetzter Kunststoff sein. Das Kabel umfasst weiter eine oder mehrere Adern mit Aderisolierungen und ist im Bereich des elektrischen Verbinders abgemantelt und die Adern sind abisoliert. Mit anderen Worten wird jeweils ein kurzer Abschnitt des Kabelmantels und der Aderisolation entfernt, um ein kurzes Stück der Adern an jeweiligen Ader-Verbindungsstellen freizulegen und dort elektrisch anzuschließen, also z.B. mit Adern einer weiteren Leitung oder Kontaktelementen mechanisch und elektrisch zu verbinden. Die Adern können z.B. mit Crimphülsen (z.B. "splice crimp") verbunden, gelötet oder verschweißt werden.

Die Kabelbaugruppe weist an der Verbindungsstelle ein dielektrisches Verbindergehäuse auf, welches aus zumindest einem ersten und zweiten Gehäuseteil besteht, welche zusammengefügt werden können, um so zusammengefügt ein im Wesentlichen geschlossenes dielektrisches Verbindergehäuse zu bilden, welches die Ader-Verbindungsstellen umschließt.

Das Verbindergehäuse weist ferner Zugentlastungsmittel für das Kabel auf, welche in den Kabelmantel eingreifen, wenn das erste und zweite vorgefertigte Gehäuseteil fest zusammengefügt sind und somit eine Zugentlastung der Ader-Verbindungsstellen bewirken.

Der Verbinder ist insbesondere ein Kabelverbinder zum direkten Verbinden von abisolierten Adern miteinander, insbesondere der abisolierten Adern eines Kabels mit abisolierten Adern von weiteren Leitern, z.B. eines weiteren Kabels. Die abisolierten Adern werden dabei also insbesondere direkt Ader-an-Ader elektrisch und mechanisch miteinander verbunden, z.B. miteinander vercrimpt. Der Verbinder oder Kabelverbinder ist demnach zur unmittelbaren Leiterzu-Leiter-Verbindung durch direkte mechanische und elektrische Verbindung der abisolierten Adern miteinander ausgebildet, und betrifft insbesondere keine komplexe Anschluss- und Verbindungsdose mit einer Mehrzahl von weiteren Anschlussfunktionen und elektronischen Komponenten. Insbesondere können die abisolierten Aderenden von zwei oder mehr Kabeln direkt miteinander verbunden werden oder es können abisolierte Aderenden von weiteren Leitern mit den abisolierten Adern des Kabels direkt miteinander verbunden werden. Z.B. werden die abisolierten Aderenden von zwei Kabeln, insbesondere unter einem Winkel von anders als 360°, vorzugsweise im Wesentlichen koaxial unter 180°, miteinander verbunden oder es werden die abisolierten Aderenden von weiteren elektrischen Leitern in einer T-Konfiguration mit den abisolierten Adern des Kabels verbunden, z.B. an diese angecrimpt, um jeweils eine freitragende nicht zerstörungsfrei lösbare unmittelbare Kabel-zu-Kabel-Verbindung bzw. Leiter-zu-Leiter-Verbindung zu schaffen. Der Kabelverbinder hat demnach insbesondere lediglich die Funktion der mechanischen und elektrischen Verbindung der elektrischen Leiter sowie der Isolation der Verbindungsstelle. Der Kabelverbinder kann z.B. als T-Verbinder ausgebildet sein, um die abisolierten Aderenden einer Stichleitung, z.B. einer Dropleitung eines Photovoltaik-Generators, an ein abisoliertes Stück eines Strangleitungskabels anzuschließen. Dabei können die Adern des Strangleitungskabels ggf. zwar abisoliert, aber noch durchgängig, also nicht getrennt sein. Mit anderen Worten ist das abisolierte Stück des Strangleitungskabels ein intermediäres Stück zwischen dessen terminierenden Enden.

Die Verwendung von getrennten Gehäusehälften, insbesondere im Außenbereich bei einer Photovoltaik-Anlage mag zunächst problematisch erschienen sein. Die Verwendung von getrennten vorgefertigten Gehäuseteilen oder -hälften aus Kunststoff bietet allerdings in vorteilhafter Weise einen hohen Komfort bei der Montage. Insbesondere durch eine integrierte Zugentlastung kann der Montageaufwand bei qualitativ hochwertiger und langlebiger Verbindung gering gehalten werden. Ferner kann mit einfachen und günstigen Bauteilen eine hohe Qualität der elektrischen Verbindung, insbesondere hinsichtlich der Zugentlastung erreicht werden. Z.B. können auf das Kabel gecrimpte Schellen zur Zugentlastung eingespart werden.

Erfindungsgemäß weist das Verbindergehäuse im montierten Zustand eine oder mehrere Kabelöffnungen auf, d.h. insbesondere eine Kabeleintrittsöffnung und/oder eine Kabelaustrittsöffnung auf, durch welche hindurch das Kabel in das Verbindergehäuse ein- und/oder austritt. Die Kabelöffnungen werden jeweils von einer an einer Stirnseite des Verbindergehäuses angeordneten Kabelaufnahmehülse gebildet.

Die Kabelaufnahmehülsen springen vorzugsweise von den gegenüberliegenden Stirnseiten des Verbindergehäuses nach außen vor, insbesondere um gegenüberliegende externe Kabeltüllen an den beiden Stirnseiten des Verbindergehäuses zu bilden. Die somit vorzugsweise in Form von Hülsenfortsätzen oder Kabeltüllen an gegenüberliegenden Seiten des Verbindergehäuses ausgebildeten Kabelaufnahmehülsen umschließen demnach das Kabel an der jeweiligen Kabelöffnung hülsenförmig. Es ist auch möglich, eines der Kabelenden z.B. an einen Schaltschrank anzuschließen. In diesem Fall kann die externe Kabeltülle mit einer Kabelverschraubung in den Schaltschrank eingeführt und dann z.B. in eine Klemme eingeschraubt werden.

Erfindungsgemäß sind die Zugentlastungsmittel im Bereich der Kabelaufnahmehülsen an einer Innenseite des Verbindergehäuses, insbesondere an den sich gegenüberliegenden Innenseiten des ersten und zweiten Gehäuseteils einstückig angeformt, was für eine stabile und dauerhafte Zugentlastung sorgt.

Gemäß einer bevorzugten Ausführungsform der Erfindung sind die beiden Kabelaufnahmehülsen als jeweils von dem Verbindergehäuse separates Teil ausgebildet und greifen an den beiden Stirnseiten des Verbindergehäuses in das erste und/oder zweite Gehäuseteil ein, wenn das erste und zweite Gehäuseteil fest zusammengefügt sind. Diese Bauform des Verbindergehäuses aus mehreren vorgefertigten Teilen ist gut montierbar. Mit anderen Worten werden die beiden Kabelaufnahmehülsen an den gegenüberliegenden Stirnseiten des Verbindergehäuses in das erste und zweite Gehäuseteil eingesetzt und werden dort vorzugsweise formschlüssig gehalten.

Bevorzugt weisen die als jeweils separates Teil ausgebildeten Kabelaufnahmehülsen an ihrem Umfang radiale Bohrungen auf und die Zugentlastungsmittel erstrecken sich radial durch diese Bohrungen hindurch nach innen, um in den Kabelmantel einzugreifen. Dadurch kann die Baugröße kompakt gehalten werden. Zweckmäßig werden die Bohrungen und die Zugentlastungsmittel so ausgestaltet, dass die Bohrungen durch die Zugentlastungsmittel abgedichtet werden. Dadurch kann verhindert werden, dass beim Vergießen Vergussmasse herauslaufen kann. Dies wird vorzugsweise durch eine Presspassung gewährleistet. Große Fasen an den Bohrungen erleichtern das Einführen der Zugentlastungsmittel. Ferner wird durch die Fasen die Wandstärke reduziert, wodurch die Verpresskräfte bzw. Montagekräfte reduziert werden können.

Die Kabelaufnahmehülsen sind axial längs des Kabels in Teilschalen geteilt, derart dass jeweils eine erste Teilschale einstückig mit dem ersten Gehäuseteil und jeweils eine zweite Teilschale einstückig mit dem zweiten Gehäuseteil ausgebildet ist, so dass die zumindest zwei Teil- oder Halbschalen bei Zusammenfügen der beiden Gehäuseteile oder -hälften zu der ringförmig geschlossenen Kabelaufnahmehülse zusammengefügt werden, welche den Kabelmantel ringförmig umschließt.

Bevorzugt weist die Kabelbaugruppe für jede geteilte Kabelaufnahmehülse eine Verbindungshülse auf, welche auf die aus den zusammengefügten Halbschalen bestehende Kabelaufnahmehülse aufgesetzt wird, und dabei die erste und zweite Teil- oder Halbschale zu der Kabelaufnahmehülse zusammenpresst und somit auch das erste und zweite Gehäuseteil zusammenhält.

Vorzugsweise wird die Verbindungshülse auf die Kabelaufnahmehülse aufgepresst, aufgerastet oder aufgeschraubt.

Hierdurch kann in vorteilhafter Weise eine feste, sichere und langlebige mechanische Verbindung der beiden Gehäusehälften und eine hinreichende Kraft für die Wirksamkeit der Zugentlastung erreicht werden. Insbesondere mit aufgepressten oder aufgeschraubten Verbindungshülsen lässt sich eine große Haltekraft zum Zusammenpressen der Gehäuseteile erzielen.

Die Zugentlastungsmittel sind vorzugsweise an der konkaven Innenseite der ersten und zweiten Teil- oder Halbschale der Kabelaufnahmehülsen einstückig angeformt, insbesondere beidseits an der Kabeleintrittsöffnung und der Kabelaustrittsöffnung und graben sich beidseits der Verbindungsstelle in den Kabelmantel ein, wenn die erste und zweite Teil- oder Halbschalen bzw. das gesamte Verbindungsgehäuse mittels der Verbindungshülsen zusammengepresst werden bzw. wird. Die Zugentlastungsmittel umfassen z.B. spitze Zugentlastungszähne und/oder Zugentlastungsrippen im Inneren der ersten und zweiten Halbschale. Vorzugsweise sind die Verbindungshülsen an ihrem inneren Umfang und Kabelaufnahmehülsen an ihrem äußeren Umfang konisch geformt, um beim Aufstecken und/oder Aufpressen der Verbindungshülsen eine feste mechanische Verbindung zwischen den Gehäusehälften zu erzielen und die Zugentlastungsmittel hinreichend tief in den Kabelmantel einzugraben. Hierdurch wird in vorteilhafter Weise trotz der Verwendung eines längs des Kabels geteilten Verbindergehäuses eine sehr stabile Zugentlastung erreicht, welche z.B. die für eine Photovoltaikverkabelung erforderlichen Auszugskräfte gewährleisten kann.

Erfindungsgemäß sind Dichtungen, z.B. in Form jeweils eines elastomeren Dichtrings z.B. aus Gummi auf dem Kabelmantel beidseits des Verbindergehäuses umfasst. Die Dichtringe oder Kabeldichtungen werden beidseits des Verbindergehäuses auf den Kabelmantel aufgesteckt und dichten im montierten Zustand den Kabelmantel gegen die Kabelaufnahmehülse ab.

Erfindungsgemäß ist die Dichtung im montierten Zustand an einer Stirnseite des Verbindergehäuses innerhalb der Kabelaufnahmehülse bzw. innerhalb der Verbindungshülse positioniert und dichtet je nach Ausführungsform z.B. gegen den Innenumfang oder gegen die Stirnseite der Kabelaufnahmehülse und/oder, falls vorhanden, gegen den Innenumfang der Verbindungshülse ab. Hierdurch wird eine hohe Dichtigkeit gegen das Eindringen von Wasser erzielt und die Dichtung ist langlebig geschützt innerhalb der Verbindungshülse angeordnet. In vorteilhafter Weise dichtet eine solche lose aufgesteckte elastomere Kabeldichtung auch Kabel mit einem Mantel aus einem Kunststoff, welcher keinen Haftverbund mit Vergussmasse oder Umspritzmasse eingeht, insbesondere aus einem vernetzten Kunststoff in gleicher Qualität wie Kabel mit z.B. PVC-Mänteln ab, da die mechanisch reibschlüssige Dichtwirkung im Wesentlichen unabhängig vom Material des Mantels ist. Vorzugsweise weist der Dichtring an seinem Außenumfang eine oder mehrere umlaufende Dichtlippen auf, um die Dichtwirkung zu verbessern, ohne die axial notwendigen Schubkräfte bei der Montage zu sehr zu vergrößern.

Vorzugsweise weist das erste oder zweite Gehäuseteil an seiner Innenseite Längsrippen längs entlang den Adern des Kabels auf, welche zwischen den Längsrippen nutförmige Kompartimente für die einzelnen Adern innerhalb des Verbindergehäuses bilden. Hierdurch können eine präzise Montage gewährleistet und die Luft- und Kriechstrecken zwischen den abisolierten Ader-Verbindungsstellen vergrößert werden.

Weiter bevorzugt weist das andere Gehäuseteil an seiner Innenseite Querrippen quer zu den Adern des Kabels auf, welche im montierten Zustand in einer Richtung quer zum Kabel mit den Längsrippen überlappen, z.B. endseitig der Längsrippen die Kompartimente teilweise verschließen. Mittels der Querrippen werden die Adern beim Zusammenfügen der Gehäusehälften quer zur Kabelachse einzeln tief in das jeweils zugehörige Kompartiment eingeschoben und im montierten Zustand darin festgehalten. Hierdurch wird ebenfalls eine hinreichende Länge der Luft- und Kriechstrecken zwischen den abisolierten Ader-Verbindungsstellen gewährleistet. Ferner kann durch die Längs- und/oder Querrippen bei der Montage eine Längs- und/oder Querausrichtung der Gehäuseteile erreicht werden.

Der elektrische Verbinder ist als ein T-Verbinder zum Herstellen eines elektrischen Abzweigs aus einem durch den Verbinder durchlaufenden Kabels ausgebildet. Dies ist insbesondere für sogenannte Trunkleitungen einer Wechselstromverkabelung von Photovoltaik-Modulen mit Modulwechselrichtern geeignet. Bei einer solchen Wechselstromverkabelung ist für jedes Photovoltaik-Modul oder für Gruppen von Photovoltaik-Modulen ein eigener Wechselrichter vorgesehen, welcher unmittelbar an dem Photovoltaik-Modul befestigt oder in der Nähe des Photovoltaik-Moduls oder von zu Gruppen zusammengefassten Photovoltaik-Modulen angebracht ist. Modulwechselrichter werden daher auch als Mikroinverter bezeichnet. Erfindungsgemäß weist das Verbindergehäuse im montierten Zustand vorzugsweise eine erste und zweite gegenüberliegende Kabelöffnung auf, an welchen dasselbe Kabel an einer Seite der Ader-Verbindungsstellen in das Verbindergehäuse eintritt und auf der anderen Seite der Ader-Verbindungsstellen wieder aus dem Verbindergehäuse austritt. Um einen Stichabgang zum Anschluss an den jeweiligen Modulwechselrichter anzuschließen (sogenannter Dropabgang) weist das Verbindergehäuse eine weitere seitliche (quer zu dem Kabel liegende) Eintrittsöffnung auf, durch welche Adern des Dropabgangs in das Verbindergehäuse eintreten und innerhalb des Verbindergehäuses mit der jeweils zugehörigen Ader des Kabels in Form eines T-Abzweigs elektrisch verbunden sind. Z.B. werden die Adern des Dropabgangs oder der Dropleitung an die in einem mittigen Bereich des Kabels abisolierten und insbesondere nicht durchtrennten Adern mit einer Crimphülse angecrimpt und abgewinkelt, was einfach und effizient herzustellen ist. Das Kabel kann dabei in einem mittigen Bereich teilabgemantelt und die Adern partiell abisoliert werden, insbesondere ohne die Adern dort zu durchtrennen. Dies ist vorteilhaft, da eine zusätzliche Kontaktstelle vermieden wird und somit keine Erhöhung des Übergangswiderstandes auftritt. Das Kabel kann an dem T-Abzweig aber auch getrennt werden. In diesem Fall liegen zwei Trunkkabel vor, die z.B. direkt miteinander verschweißt oder vercrimpt werden können.

Diejenige Gehäusehälfte, durch welche die Adern des Dropabgangs in das Verbindergehäuse eintreten, weist quer zu dem Kabel einen aus dieser Gehäusehälfte vorspringenden Anschlusszapfen auf, welcher die Eintrittsöffnung für die Adern des Dropabgangs bildet, so dass das Verbindergehäuse insgesamt eine T-Form aufweist. Vorzugsweise wird die Eintrittsöffnung im Inneren des Anschlusszapfens durch einzelne Löcher oder Bohrungen für die Adern des Dropabgangs gebildet, so dass die Adern des Dropabgangs einzeln in dem Anschlusszapfen mehr oder weniger abgedichtet sind. Dadurch kann u.a. verhindert werden, dass beim Umspritzen mit Kunststoff der Kunststoff der Umspritzung durch den Anschlusszapfen austritt.

Nach dem elektrischen Kontaktieren der zugehörigen Adern, dem Zusammenfügen der Gehäusehälften und ggf. Verpressung o.ä. der Verbindungshülsen kann das Verbindergehäuse insbesondere mit der Verbindungshülse im Wesentlichen vollständig mit einem Kunststoff umspritzt werden, so dass die Umspritzung vorzugsweise bis über die Verbindungshülse und bis an den Kabelmantel reicht. Hierdurch kann eine Sicherung der Verbindungshülsen und eine weitere Verbesserung der Dichtigkeit erreicht werden. Trotzdem ist die erfindungsgemäße Verbindung insbesondere aufgrund der innenliegenden Dichtringe auf dem Kabelmantel nicht ausschließlich auf die Abdichtung durch die Umspritzung angewiesen. Durch den hohen Druck beim Umspritzen des Verbindergehäuses wird ebenfalls eine große Kraft zum Zusammenpressen der Gehäuseteile erzeugt.

Vorzugsweise weist das Verbindergehäuse, z.B. eines der Gehäuseteile Öffnungen auf, in welche der Kunststoff beim Umspritzen ins Innere des Verbindergehäuses ggf. bis zu den Adern eindringen und den Innenraum des Verbindergehäuses, insbesondere um die Ader-Verbindungsstelle herum, zumindest teilweise ausfüllen kann. Die Kabelverbindung benötigt daher nicht notwendiger Weise eine separate Vergussmasse wie bislang für Trunkleitungs-Verbindungen häufig verwendet. Trotzdem sorgt der Kunststoff der Umspritzung beim Eindringen in den Innenraum des Verbindergehäuses in vorteilhafter Weise für eine weitere Verbesserung der mechanischen Stabilität und Langlebigkeit. Darüber hinaus können die Kriechstrecken weiter vergrößert werden. Das Verbindergehäuse kann aber auch eine spezielle Einspritzöffnung aufweisen, z.B. in Form einer weiteren Bohrung in dem Anschlusszapfen, durch welche eine Vergussmasse ins Innere des Verbindergehäuses eingespritzt wird.

Generell kann die Umspritzung mit dazu beitragen, dass z.B. ein üblicher Kälteschlagtest für solche Verbindungen mit einer Schlagenergie von 7 Joule bei einer Temperatur von -35°C bestanden wird.

Das Verbindergehäuse braucht nicht notwendiger Weise aus einem vernetzten Kunststoff zu bestehen, sondern kann kostengünstig wie auch die Umspritzung aus einem einfach und kostengünstig zu verarbeitenden thermoplastischen Kunststoff wie z.B. PPE bestehen. Dies sorgt für eine besonders gute Verbindung zwischen dem Verbindergehäuse und der Umspritzung der vorher montierten Gehäusehälften und sonstigen Bauteile. Vorzugsweise bestehen das Verbindergehäuse und die Umspritzung beide aus einem thermoplastischen Kunststoff, insbesondere aus demselben Kunststoff.

Weiterer Gegenstand der Offenbarung ist eine Baugruppe gemäß Anspruch 13, aus einem Modulwechselrichter und der daran mit den Adern des Dropabgangs angeschlossenen Trunkleitungs-Kabelbaugruppe, wobei die Trunkleitungs-Kabelbaugruppe insbesondere unmittelbar an den Modulwechselrichter angeschlossen ist, wobei das erste oder zweite Gehäuseteil einen quer zu dem Kabel aus dem jeweiligen Gehäuseteil vorspringenden Anschlusszapfen aufweist, welcher eine Eintrittsöffnung für die Adern des Dropabgangs bildet, und sich in dem montierten Zustand durch eine Öffnung in das Gehäuse des Modulwechselrichters erstreckt, um die Adern des Dropabgangs in den Modulwechselrichter zu führen und dort an den Wechselstromausgang des Wechselrichters anzuschließen. Der Anschlusszapfen kann z.B. ein Gewinde aufweisen und damit im Innern des Modulwechselrichters verschraubt sein.

Weiterer Gegenstand der Offenbarung ist eine Photovoltaik-Anlage gemäß Anspruch 14, mit einer Mehrzahl von Photovoltaik-Modulen, welche entweder jedes einzeln oder gruppenweise jeweils einen Modulwechselrichter, einen sogenannten Mikroinverter, aufweisen, wobei jeweils eine der vorstehend beschriebenen Trunkleitungs-Kabelbaugruppen an die Modulwechselrichter angeschlossen ist, und wobei die Trunkleitungs-Kabelbaugruppen zu einem wechselstromseitigen Strang zusammengeschaltet sind, um eine Wechselstromverkabelung für die Photovoltaik-Module zu bilden.

Weiterer Gegenstand der Offenbarung ist ein Verfahren gemäß Anspruch 15, zum Herstellen einer elektrischen Kabelbaugruppe mit einem Verbinder, umfassend folgende Schritte:
Bereitstellen eines elektrischen Kabels mit einem Kabelmantel, insbesondere aus einem Kunststoff, welcher keinen Haftverbund mit Vergussmasse oder Umspritzmasse eingeht, z.B. einem vernetzten Kunststoff, und mit einer oder mehreren Adern mit Aderisolierungen,
Bereitstellen eines ersten und zweiten miteinander paarbaren Gehäuseteils mit Zugentlastungsmitteln für das Kabel,
Abmanteln eines Abschnitts des Kabelmantels,
partiell Entfernen der Aderisolierungen im Bereich der Abmantelung, um die Adern freizulegen,
elektrisches Anschließen von weiteren Adern in Form einer T-Abzweigung oder von Kontaktelementen an die freigelegten Adern zum Herstellen von Ader-Verbindungsstellen,
Einfügen des Kabels im Bereich der Ader-Verbindungsstellen in den ersten oder zweiten Gehäuseteil,
Aufsetzen des anderen Gehäuseteils und Zusammenfügen des ersten und zweiten Gehäuseteils, um so ein im Wesentlichen geschlossenes dielektrisches Verbindergehäuse zu bilden, welches die Ader-Verbindungsstellen umschließt, wobei die Zugentlastungsmittel in den Kabelmantel eingreifen, wenn das erste und zweite Gehäuseteil fest zusammengefügt sind.

Die Dichtungen werden beidseits des Verbindergehäuses auf den Kabelmantel aufgesetzt und in Richtung der Verbindungsstelle geschoben. Die Verbindungshülsen oder Kabelaufnahmehülsen werden über die Dichtungen geschoben, so dass im montierten Zustand die Dichtungen innen gegen den Kabelmantel und außen gegen die Kabeltülle abdichten.

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind und die Merkmale der verschiedenen Ausführungsbeispiele miteinander kombiniert werden können.

### Kurzbeschreibung der Figuren

Es zeigen:
- Fig. 1: eine perspektivische Ansicht eines Abschnitts eines teilabgemantelten Kabels mit drei partiell abisolierten Adern,
- Fig. 2: den Kabelabschnitt aus Fig. 1 mit angecrimpten Adern eines Dropabgangs,
- Fig. 3: eine perspektivische Ansicht einer unteren Gehäusehälfte gemäß einer ersten Ausführungsform der Erfindung,
- Fig. 4: eine perspektivische Ansicht einer oberen Gehäusehälfte gemäß der ersten Ausführungsform der Erfindung,
- Fig. 5: eine perspektivische Ansicht einer zu verpressenden Verbindungshülse gemäß der ersten Ausführungsform der Erfindung,
- Fig. 6: den Kabelabschnitt aus Fig. 2, eingesetzt in die untere Gehäusehälfte aus Fig. 3,
- Fig. 7: wie Fig. 6, aber um 180 Grad gedreht,
- Fig. 8: wie Fig. 7 mit aufgesetzter oberer Gehäusehälfte,
- Fig. 9: wie Fig. 8 mit aufgeschobenen Kabeldichtungen,
- Fig. 10: wie Fig. 9 mit Verbindungshülsen,
- Fig. 11: wie Fig. 10 nach dem Aufpressen der Verbindungshülsen und Umspritzung,
- Fig. 12: wie Fig. 11, in einer Aufsicht von oben,
- Fig. 13: eine Schnittdarstellung entlang der Linie A-A in Fig. 12,
- Fig. 14-17: perspektivische Ansichten einer oberen und unteren Gehäusehälfte gemäß einer zweiten Ausführungsform der Erfindung,
- Fig. 18: eine perspektivische Ansicht einer verschraubbaren Verbindungshülse gemäß der zweiten Ausführungsform der Erfindung,
- Fig. 19: eine perspektivische Ansicht der Kabelbaugruppe mit einer aufgeschraubten und einer noch nicht aufgeschraubten Verbindungshülse,
- Fig. 20: eine teilweise aufgebrochene Seitenansicht der Kabelgruppe aus Fig. 19 mit beiden aufgeschraubten Verbindungshülsen,
- Fig. 21-24: verschiedene Ansichten von oberen und unteren Gehäusehälften einer dritten Ausführungsform der Erfindung,
- Fig. 25 und 26: verschiedene Ansichten einer aufrastbaren Verbindungshülse gemäß der dritten Ausführungsform der Erfindung,
- Fig. 27: eine perspektivische Darstellung der Kabelbaugruppe mit einer aufgerasteten und einer noch nicht aufgerasteten Verbindungshülse gemäß der dritten Ausführungsform der Erfindung,
- Fig. 28: wie Fig. 27 mit beiden Verbindungshülsen im aufgerasteten Zustand,
- Fig. 29: eine teilweise aufgebrochene Seitenansicht der Kabelbaugruppe aus Fig. 28 und
- Fig. 30: eine perspektivische Teildarstellung eines Photovoltaik-Moduls mit Solaranschlussdose, Modulwechselrichter und einer Trunkleitungs-Kabelbaugruppe,
- Fig. 31: wie Fig. 2,
- Fig. 32: wie Fig. 31 mit aufgeschobenen Dichtungen,
- Fig. 33: wie Fig. 32 mit aufgeschobenen Kabelaufnahmehülsen gemäß einer vierten Ausführungsform der Erfindung,
- Fig. 34: eine perspektivische Ansicht der unteren Gehäusehälfte gemäß der vierten Ausführungsform der Erfindung,
- Fig. 35: eine perspektivische Ansicht der oberen Gehäusehälfte gemäß der vierten Ausführungsform der Erfindung,
- Fig. 36: einen Querschnitt durch die untere Gehäusehälfte aus Fig. 34,
- Fig. 37: einen Querschnitt durch die obere Gehäusehälfte aus Fig. 35,
- Fig. 38: eine perspektivische Ansicht der mit der oberen Gehäusehälfte aus Fig. 35 zusammengesetzten Anordnung aus Fig. 33,
- Fig. 39: eine perspektivische Ansicht der Anordnung aus Fig. 38 beim Aufsetzen der unteren Gehäusehälfte auf die obere Gehäusehälfte,
- Fig. 40: eine perspektivische Ansicht der Anordnung aus Fig. 39 mit zusammengesetztem Verbindergehäuse beim Einführen einer Spritzdüse.

### Detaillierte Beschreibung der Erfindung

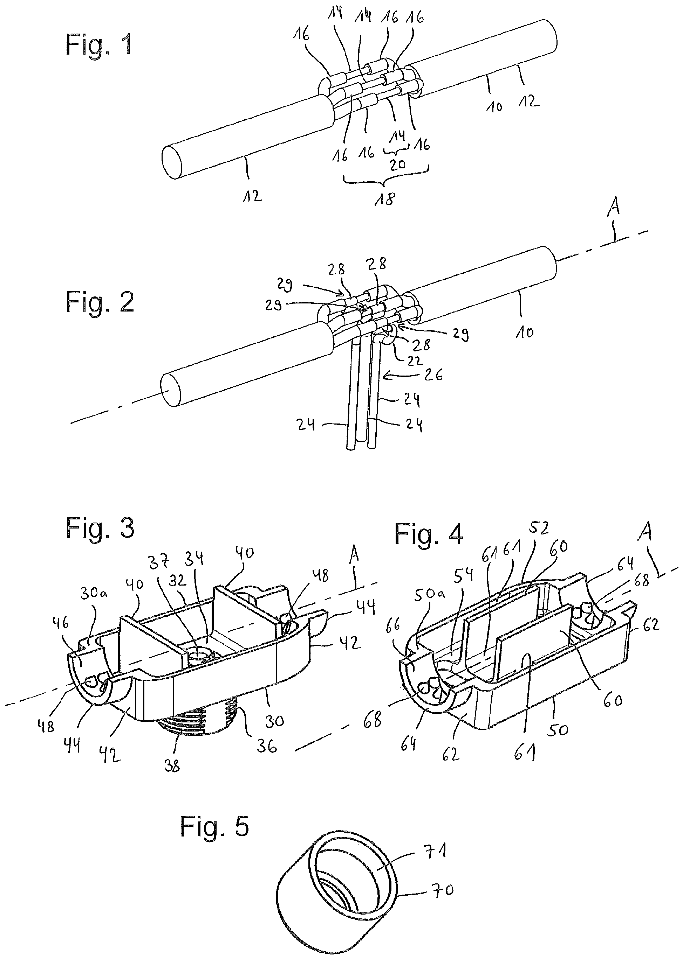

Bezug nehmend auf Fig. 1 wird ein Kabel 10 mit Kabelmantel 12 und drei Adern 14 jeweils mit Aderisolierung 16 in einem mittigen Bereich 18, also nicht an den Kabelenden, zunächst teilabgemantelt. D.h., dass in dem intermediären Bereich 18 des Kabels 10 beidseits des intermediären Bereichs 18 der Kabelmantel 12 eingeschnitten und in dem intermediären Bereich 18 entfernt wird, sodass das Kabel 10 demnach lediglich in dem intermediären Bereich 18 abgemantelt ist. In diesem teilabgemantelten Bereich 18 werden anschließend die Adern 14 partiell abisoliert, d.h. es wird ein intermediärer Bereich 20 innerhalb des intermediären teilabgemantelten Bereichs 18 des Kabels 10 hergestellt, indem die Aderisolierung 16 von den Adern 14 entfernt ist. Mit anderen Worten verbleiben beidseits der abisolierten Adern 14 die Aderisolation 16 und der Kabelmantel 12 des Kabels 10. Die Adern 14 werden hierbei nicht durchtrennt. Im vorliegenden Beispiel werden die drei Adern 14 noch räumlich voneinander separiert und in einer Ebene nebeneinander angeordnet, wobei die drei Adern 14 beidseits des intermediären Bereichs etwas nach oben gebogen und somit axial versetzt werden, um das spätere Einsetzen in die untere Gehäusehälfte bereits entsprechend vorzubereiten.

Der Kabelmantel 12 besteht aus vernetztem Kunststoff, welcher eine hohe Beständigkeit gegen Witterungseinflüsse, insbesondere UV-Strahlung und Feuchtigkeit aufweist.

Bezug nehmend auf Fig. 2 werden an jede Ader 14 im abisolierten Bereich 20 jeweils ein abisoliertes Ende 22 einer Ader 24 eines Dropabgangs 26 mittels je einer Crimphülse 28 angecrimpt, um Ader-Verbindungsstellen 29 eines T-Abzweigs an dem Kabel 10 zu erzeugen.

Bezug nehmend auf Fig. 3 weist die untere Gehäusehälfte 30 einen wannenförmigen Körper 32 auf, von dessen Boden 34 sich ein Anschlusszapfen 36 nach außen erstreckt. Der Anschlusszapfen 36 weist Verbindungsmittel in diesem Beispiel in Form eines Außengewindes 38 auf, um in eine Öffnung eines Modulwechselrichters eingesteckt und dort verschraubt werden zu können. Alternativ kann der Anschlusszapfen 36 auch mit einem Keil fixiert, verrastet oder anderweitig befestigt werden. Im Innern der unteren Gehäusehälfte 30 erstrecken sich von dessen Boden 34 zwei Querrippen 40 vom Boden 34 nach oben, d.h. in Richtung der oberen Gehäusehälfte 50. An den beiden stirnseitigen Enden 42 der unteren Gehäusehälfte 30 erstrecken sich axial entlang der Achse A Gehäusevorsprünge in Form von Halbschalen 44. An der Innenseite der unteren Gehäusehälfte 30, in diesem Beispiel an den konkaven Innenseiten 46 der Halbschalen 44, sind in diesem Beispiel Zugentlastungszähne 48 einstückig angeformt. Es können aber auch z.B. Zugentlastungsrippen an die konkaven Innenseiten der Halbschalen angeformt sein. Die zur unteren Gehäusehälfte 30 komplementäre obere Gehäusehälfte 50 weist ebenfalls einen wannenförmigen Körper 52 auf. Von dessen Deckelplatte 54 erstrecken sich zwei Längsrippen 60, welche das Gehäuseinnere in drei axiale Kompartimente 61 unterteilen, in welchen im montierten Zustand die drei Adern 14 des Kabels 10 axial verlaufen. Die Ader-Verbindungsstellen 29 zwischen den Adern 14 des Kabels 10 und den Adern 24 des Dropabgangs 26 werden von den Längsrippen 60 voneinander getrennt, um die Luft- und Kriechstrecken zu vergrößern. An den beiden stirnseitigen Enden 62 der oberen Gehäusehälfte 50 erstrecken sich axial Halbschalen 64 bzw. springen axial aus den stirnseitigen Enden 62 vor. An der Innenseite der oberen Gehäusehälfte 50, in diesem Beispiel an den konkaven Innenseiten 66 der Halbschalen 64, sind Zugentlastungszähne 68 einstückig angeformt. Die beiden Gehäusehälften 30, 50 sind miteinander paarbar, wobei die Querrippen 40 und Längsrippen 60 über den jeweiligen umlaufenden Rand 30a, 50a der unteren und oberen Gehäusehälfte 30, 50 hinausragen und die Längsrippen 60 zwischen die Querrippen 40 eingreifen, wenn die beiden Gehäusehälften 30, 50 zusammengesetzt sind, sodass die Querrippen 40 und die Längsrippen 60 quer zur Achse A überlappen.

Fig. 5 zeigt eine Verbindungshülse 70, welche im zusammengebauten Zustand der beiden Gehäusehälften 30, 50 auf die Kabelaufnahmehülsen 72, welche beidseits des Verbindergehäuses von den jeweiligen Halbschalen 44, 46 gebildet werden, aufgepresst wird.

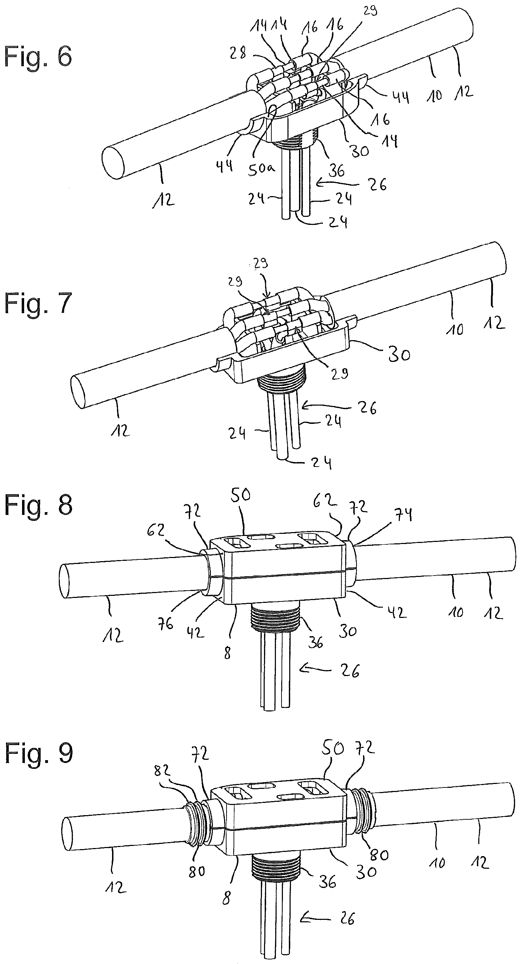

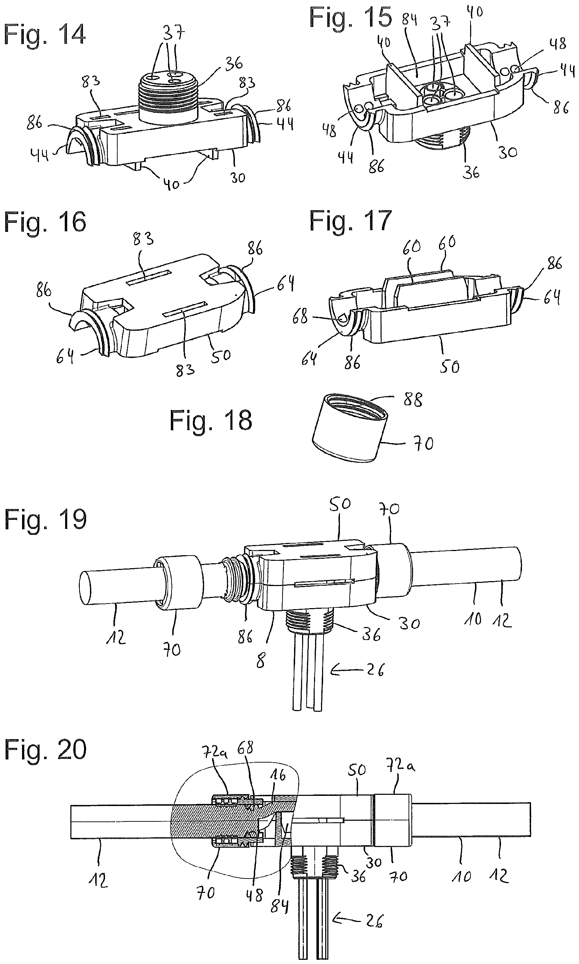

Bezug nehmend auf Fig. 6 wird das mit dem Dropabgang 26 vercrimpte Kabel 10 in die untere Gehäusehälfte 30 eingesetzt, wobei die Adern 24 des Dropabgangs 26 durch Einzelbohrungen 37 in dem Anschlusszapfen 36 nach außen geführt werden (vgl. auch Fig. 14/15 und 21/22). Die Querrippen 14 sorgen dafür, dass die Adern 14 axial versetzt etwas oberhalb des Randes 50a gehalten werden und der Mantel 12 des Kabels 10 liegt in den beiden stirnseitigen Halbschalen 44.

Bezug nehmend auf Fig. 8 wird die obere Gehäusehälfte 50 auf die untere Gehäusehälfte 30 aufgesetzt, um ein im Wesentlichen geschlossenes Kunststoff-Verbindergehäuse 8 zu bilden, in welches das Kabel 10 durch eine Kabeleintrittsöffnung 74 ein und dasselbe Kabel 10 in einer koaxialen Kabelaustrittsöffnung 76 wieder austritt, wobei die Kabeleintrittsöffnung 74 und die Kabelaustrittsöffnung 76 jeweils von den stirnseitigen koaxialen gegenüberliegenden Kabelaufnahmehülsen 72 gebildet werden. Der Dropabgang 26 tritt durch die Bohrungen 37 in dem Anschlusszapfen 36 in das Innere des Verbindergehäuses 8 ein.

Bezug nehmend auf Fig. 9 werden stirnseitig zwei Dichtungen 80 auf die Kabelaufnahmehülsen 72 aufgeschoben, wobei die Dichtungen 80 in dem dargestellten Beispiel ringförmig mit flachem Querschnitt und mehreren sich nach außen ringförmig erstreckenden Dichtlippen 82 ausgebildet sind.

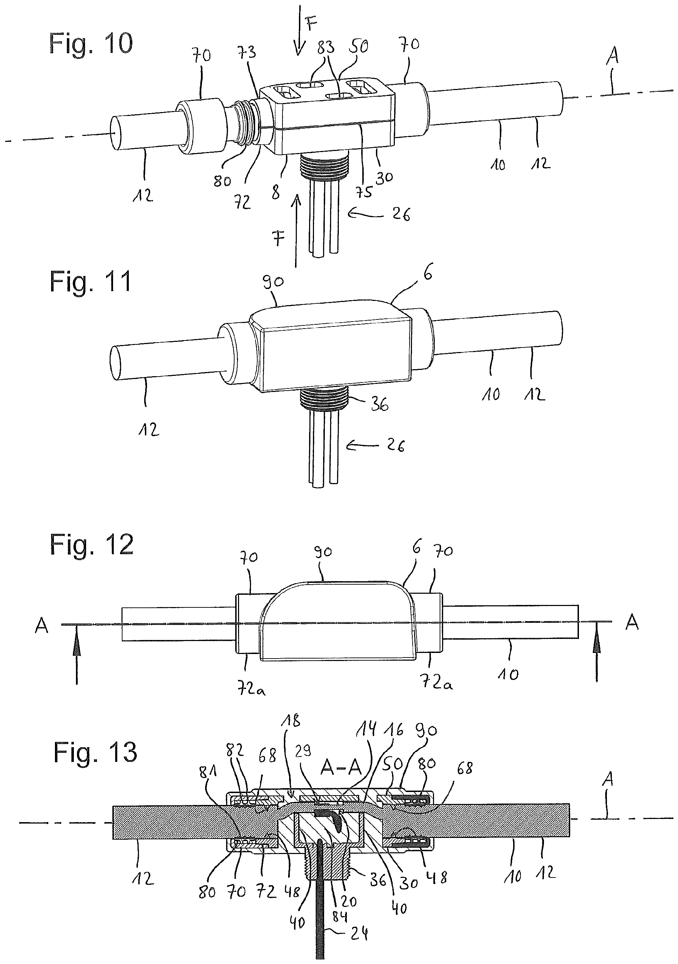

Bezug nehmend auf Fig. 10 werden die Verbindungshülsen 70 jeweils gegenüberliegend über die Dichtringe 80 und die Kabelaufnahmehülsen 72 aufgeschoben und bei der Ausführungsform in Fig. 1 bis 13 mit den Kabelaufnahmehülsen 72 verpresst. Hierzu sind die ringförmige Außenseite 73 der Kabelaufnahmehülse 72 sowie die ringförmige Innenseite 71 der Verbindungshülse 70 jeweils passgenau zu einander konisch ausgebildet, sodass bei Aufpressen eine hinreichende Presskraft F quer zur axialen Trennlinie 75 zwischen den beiden Gehäusehälften 30, 50 erzeugt wird. Beim Verpressen bzw. durch die radial wirksame Presskraft F graben sich die Zugentlastungszähne 48, 68 in den Kabelmantel 12 ein, sodass eine wirksame und dauerhafte Zugentlastung gewährleistet ist. Außerdem presst die Verbindungshülse 70 die Dichtung 80 auf das Kabel 10 und verhindert dadurch, dass Wasser am Kabel 10 entlang fließen kann.

Bezug nehmend auf Fig. 11 wird die gesamte Anordnung der Verbindung aus dem zusammengebauten Verbindergehäuse 8 mit den Verbindungshülsen 70 mit einer Kunststoffumspritzung 90 umspritzt.

Die Umspritzung 90 umschließt das Verbindergehäuse 8 bis zu dem Anschlusszapfen 36, dessen Gewinde 38 frei bleibt, und reicht über die Verbindungshülsen 70 bis an den Kabelmantel 12. Durch die Umspritzung 90 wird ferner die gewünschte Außenkontur des Verbinders 6 hergestellt. Die Umspritzmasse verbindet sich gut mit dem Verbindergehäuse 8, wodurch Kriechwege am Verbindergehäuse 8 verhindert werden können.

Bezug nehmend auf Fig. 13 kann der Kunststoff der Umspritzung 90 durch Öffnungen 83 ins Innere 84 des Verbindergehäuses 8 eindringen und ggf. das Innere 84 ausfüllen. Somit ist die Umspritzung 90 einstückig mit der Füllung des Gehäuseinneren 84 ausgebildet und besteht in diesem Beispiel aus einem thermoplastischen spritzbaren Kunststoff, z.B. aus einem Polyphenylenether (PPE) oder einem Blend enthaltend PPE.

Die Kabelanschlusshülsen 72 umschließen den Kabelmantel 12 beidseits des Verbindergehäuses 8 vollständig ringförmig und die Zugentlastungsmittel, in diesem Beispiel in Form von spitzen Zugentlastungszähnen 48, 68, graben sich beidseits der Ader-Verbindungsstellen 29 tief in den Kabelmantel 12 ein, sodass eine gute Zugentlastung der Ader-Verbindungsstellen 29 gewährleistet ist. Die Ringdichtung 80 wird zwischen der Verbindungshülse 70 und der Kabelanschlusshülse 72 komprimiert und dichtet an ihrer Ringinnenseite 81 ringförmig gegen den Kabelmantel 12 und an ihrer Ringaußenseite mit den Dichtlippen 82 gegen die ringförmige Innenseite 71 der Verbindungshülse 70. Insbesondere die Kombination aus den fest verbundenen Gehäusehälften 30, 50 mit den verbundenen Halbschalen 44, 64, der elastomeren separaten Ringdichtung 80 sowie der Verbindungshülse 70 in Form einer Überwurfhülse und der darum vorhandenen Umspritzung 90 sorgen für eine hervorragende Abdichtung und damit Wetterbeständigkeit und Langlebigkeit der gesamten Verbindung.

Bezug nehmend auf die Fig. 14 bis 20 ist eine zweite Ausführungsform des Verbindergehäuses 8 bzw. der beiden Gehäusehälften 30, 50 sowie der Verbindungs- oder Überwurfhülse 70 dargestellt. Die beiden zur Kabelaufnahmehülse 72 verbundenen Halbschalen 44, 64 weisen an ihrem radial äußeren Umfang ein Gewinde 86 auf, auf welches die Verbindungshülse 70 mit einem Innengewinde 88 aufgeschraubt wird. Auch diese Verschraubung bietet eine hinreichende Verpressung der beiden Gehäusehälften 30, 50, insbesondere wenn auch hier eine konische Bauform verwendet wird. Im Übrigen entsprechen der Aufbau und die Montage der in Fig. 1 bis 13 dargestellten ersten Ausführungsform.

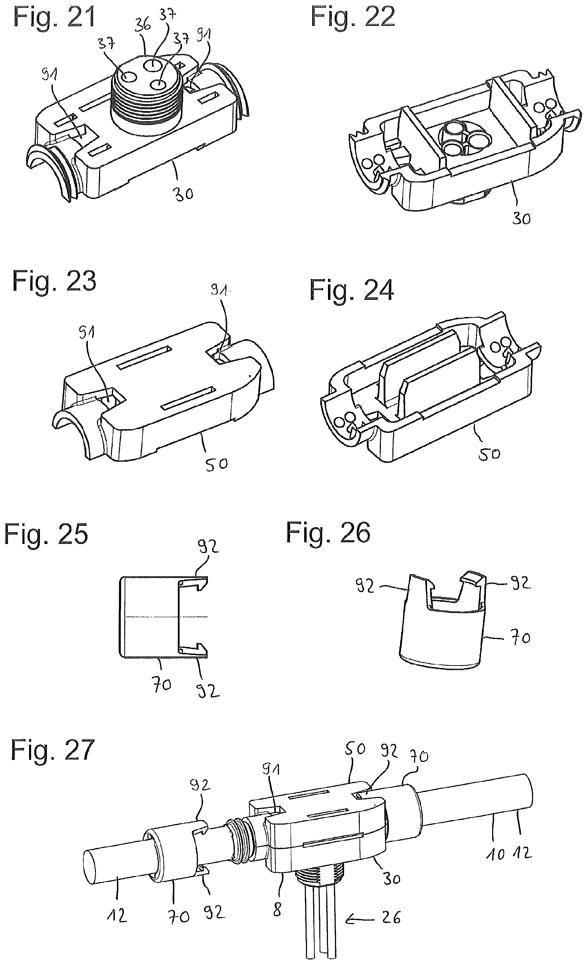

Bezug nehmend auf die Fig. 21 bis 29 weist eine dritte Ausführungsform des Verbindergehäuses 8 an den beiden Gehäusehälften 30, 50 jeweils axial beidseits der Verbindungsstellen 29 Rastnuten 91 auf, in welche Rastarme 92 beim Aufstecken der Verbindungshülsen 70 einrasten. Bei dieser Ausführungsform kommt die Doppelfunktion der Umspritzung 90, nämlich einerseits Abdichtung gegen Feuchtigkeit und andererseits Erzeugen von Presskraft zum Verbinden beiden Gehäusehälften 30, 50 bzw. der jeweiligen Halbschalen 44, 64 besonders zum Tragen, um eine hinreichende Presskraft auf die Zugentlastungsmittel 48, 68 auszuüben, damit sich diese bei der Montage hinreichend in den Kabelmantel 12 eingraben. Im Übrigen entsprechen Konstruktion und Montage der ersten und zweiten Ausführungsform der Erfindung gemäß Fig. 1 bis 13 bzw. Fig. 14 bis 20.

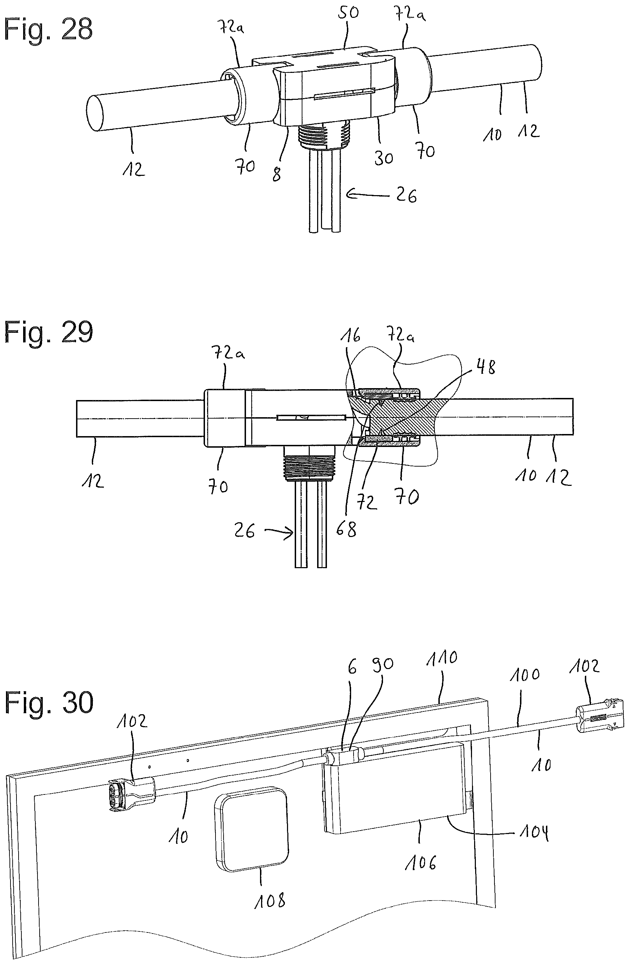

Bezug nehmend auf die Fig. 30 wird die fertig montierte Trunkleitungs-Kabelbaugruppe 100 mit endseitigen Steckverbindern 102 und dem T-förmigen Kabelverbinder 6 an einen Wechselrichter 104 angeschlossen. Hierzu wird der Kabelverbinder 6 mit seinem Anschlusszapfen 36 in eine Öffnung des Wechselrichtergehäuses 106 eingesteckt und innerhalb des Wechselrichtergehäuses 106 verschraubt (nicht dargestellt). Eine an sich bekannte Solaranschlussdose 108 kontaktiert die Leiterbändchen des Photovoltaik-Moduls 110, welche mit nicht dargestellten Verbindungskabeln mit dem Wechselrichter 104 verbunden ist. Hiermit kann eine Photovoltaik-Anlage mit Modulwechselrichtern 104 an jedem Solarmodul 110 oder an Gruppen von Solarmodulen 110 mit Wechselstromverkabelung aufgebaut werden. Das Kabel 10 kann demnach als Trunkkabel oder Trunkleitungskabel bezeichnet werden.

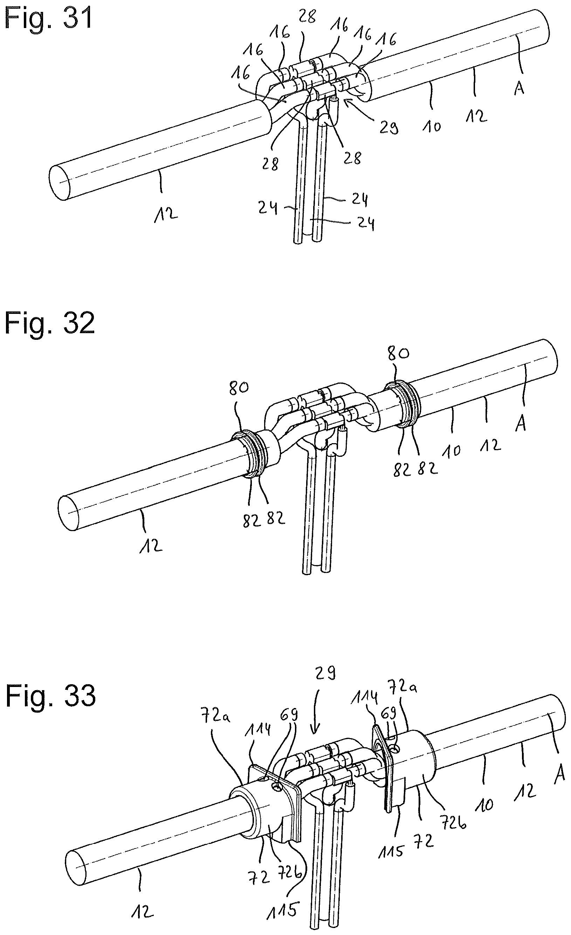

Bezug nehmend auf die Fig. 31 bis 40 ist eine vierte beispielhafte Ausführungsform der Erfindung dargestellt. Bei dieser wird nach dem beidseitigen Aufschieben der Dichtungen 80 auf den Kabelmantel 12 auf beiden Seiten der Ader-Verbindungsstellen 29 jeweils eine Kabelaufnahmehülse 72 aufgeschoben, welche im montierten Zustand die zugehörige Dichtung 80 umschließt und beherbergt. Bei dieser Ausführungsform sind die beiden Kabelaufnahmehülsen 72 als von dem Verbindergehäuse 8 separate Teile ausgebildet, welche mit den beiden Gehäusehälften 30, 50 zusammengebaut werden. Die Dichtung 80 dichtet mit ihren umlaufenden äußeren Dichtlippen 82 gegen den inneren Umfang der Kabelaufnahmehülse 72, welche eine Kabeltülle 72a bildet.

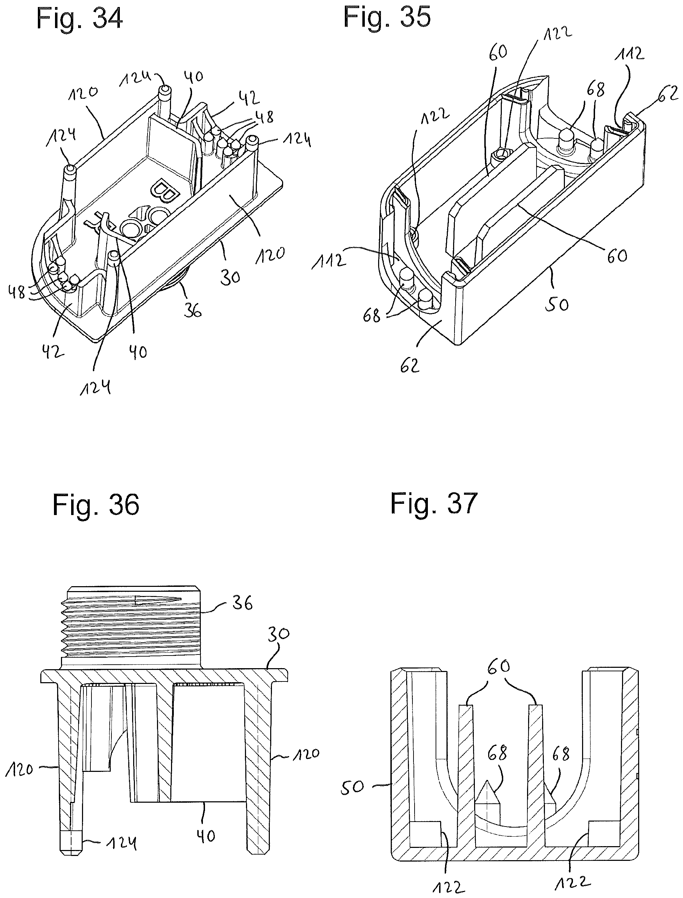

Bezug nehmend auf die Fig. 34 bis 37 weist die obere Gehäusehälfte 50 an ihren beiden stirnseitigen Enden 62 jeweils eine quer zum Kabel 10 verlaufende Aufnahme 112 auf. Die beiden Aufnahmen 112 für die beiden Kabelaufnahmehülsen 72 umfassen jeweils eine quer zum Kabel verlaufende Schiebeführung für einen Kragen 114 der zugehörigen Kabelaufnahmehülse 72. Demnach werden nach entsprechender axialer Positionierung der beiden Kabelaufnahmehülsen 72 auf dem Kabelmantel 12 die obere Gehäusehälfte 50 und die teilmontierte Kabelanordnung mit den beiden Kabelaufnahmehülsen 72 quer zum Kabel ineinander geschoben, wobei die Kragen 114 in die Aufnahmen 112 eingeführt werden. Durch die radiale Schiebeführung besteht im montierten Zustand ein axialer Formschluss zwischen der Kabelaufnahmehülse 72 und der oberen Gehäusehälfte 50.

Die beiden Kabelaufnahmehülsen 72 weisen ferner jeweils radiale Bohrungen 69 auf, welche sich durch den Ringmantel 72b der jeweiligen Kabelaufnahmehülse 72 hindurch erstrecken. In diese Bohrungen 69 greifen beim Zusammenschieben der oberen Gehäusehälfte 50 und der beiden Kabelaufnahmehülsen 72 die Zugentlastungszähne 68 ein und hindurch, um durch die Bohrungen 69 in den Kabelmantel 12 einzugreifen und dadurch die Zugentlastung zu bewirken.

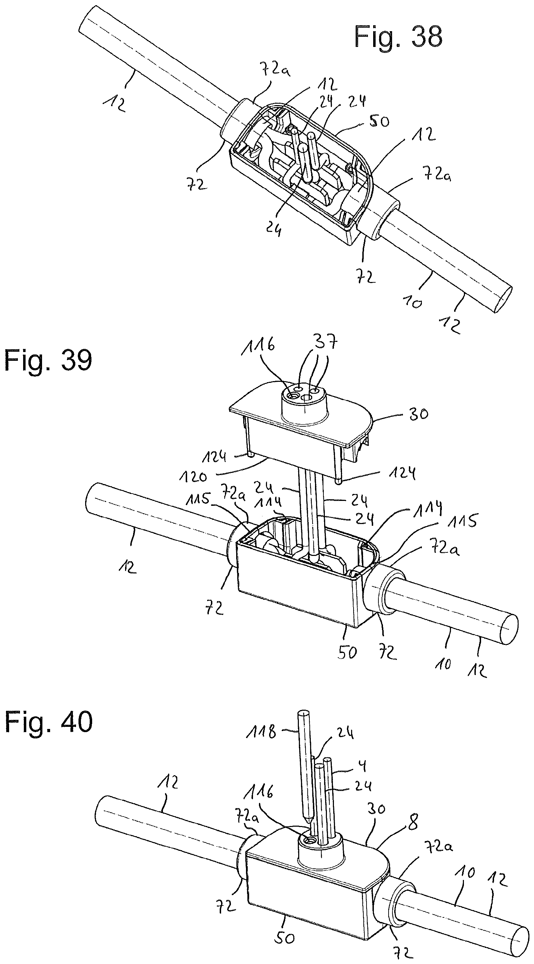

Bezug nehmend auf die Fig. 39 wird anschließend die untere Gehäusehälfte 30 auf die obere Gehäusehälfte 50 aufgesetzt und in diese eingesteckt, wobei die Adern 24 des Dropabgangs 26 durch die Bohrungen 37 in dem Anschlusszapfen 36 gefädelt und nach außen geführt werden. Die untere Gehäusehälfte 30 weist Zugentlastungszähne 48 auf, welche in diesem Beispiel an der Innenseite des Kragens 114 unmittelbar in den Kabelmantel 12 eingreifen. Hierzu ist der Kragen 114 an dem der unteren Gehäusehälfte 30 zugewandten Rand 115 axial nach außen ausgewölbt. Nach dem Zusammenbau des Verbindergehäuses 8, bestehend aus den beiden Gehäusehälften 30, 50 und den beiden an den stirnseitigen Enden 42, 62 des Verbindergehäuses 8 formschlüssig eingesetzten Kabelaufnahmehülsen 72 ist ein im Wesentlichen geschlossenes Verbindergehäuse 8 aus vorgefertigten Kunststoffteilen gebildet, welches die Ader-Verbindungsstellen 29 vollständig umschließt. In diesem Zustand ist das Verbindergehäuse 8 innen noch hohl.

Bezug nehmend auf die Fig. 40 weist das Verbindergehäuse 8 eine Einspritzbohrung 116 auf, und zwar in diesem Beispiel in dem Anschlusszapfen 36 neben den Bohrungen 37 für die Adern 24 des Dropabgangs 26, in welche nach dem Zusammenbau des Verbindergehäuses 8 eine Einspritzdüse 118 in das Verbindergehäuse 8 eingeführt werden kann. Mit der Einspritzdüse 118 wird anschließend das Verbindergehäuse 8 mit Kunststoff-Vergussmasse ausgefüllt. Bei dieser Ausführungsform reicht das Ausfüllen mit Kunststoff-Vergussmasse aus, um eine hinreichende Dichtigkeit zu gewährleisten. Ein zusätzliches Umspritzen ist nicht notwendig, soll aber auch nicht ausgeschlossen sein.

Bezug nehmend auf die Fig. 34 bis 40 bildet die untere Gehäusehälfte 30 ein Deckelteil für die obere Gehäusehälfte 50 und weist Seitenteile 120 auf, welche in die obere Gehäusehälfte 50 eingreifen. Ferner weist die obere Gehäusehälfte 50 innere einstückig angeformte Presshülsen 122 auf, in welche komplementäre Pressstifte 124 der unteren Gehäusehälfte 30 eingreifen und mit den Presshülsen 122 verpresst werden. Hierdurch wird eine sichere Verbindung der beiden Gehäusehälften 30, 50 erreicht.

Bei allen Ausführungsformen bilden die separaten oder mit den beiden Gehäusehälften 30, 50 integrierten Kabelaufnahmehülsen 72 sich von den beiden stirnseitigen Enden 42, 62 der beiden zusammengesetzten Gehäusehälften 30, 50 bzw. des montierten Verbindergehäuses 8 erstreckende Kabeltüllen 72a, welche die Dichtungen 80 umschließen und beherbergen. Die ringförmig von den Kabeltüllen 72a umschlossenen Dichtungen 80 dichten demnach mit ihrem inneren Umfang gegen den Kabelmantel 12 und mit ihrem äußeren Umfang gegen den inneren Umfang der Kabeltüllen 72a. Erfindungsgemäß beherbergen die externen Kabeltüllen 72a die Dichtungen 80 zum Dichten des Verbindergehäuses 8 an den Kabelöffnungen und gegebenenfalls zumindest teilweise die Zugentlastungsmittel 48, 68. Bei der ersten bis dritten Ausführungsform der Erfindung werden die beiden gegenüberliegenden Kabeltüllen 72a durch das Zusammenwirken der beiden Halbschalen 44, 64 mit der Verbindungshülse 70 gebildet.

Es ist dem Fachmann ersichtlich, dass die vorstehend beschriebenen Ausführungsformen beispielhaft zu verstehen sind und die Erfindung nicht auf diese beschränkt ist, sondern in vielfältiger Weise variiert werden kann, ohne den Schutzbereich der Ansprüche zu verlassen.

Es ist ersichtlich, dass raumbezogene Begriffe wie oben und unten, z.B. bezogen auf die beiden Gehäusehälften 30, 50, illustrativ in Bezug auf die Montage an einer Oberseite des Wechselrichters 106 zu verstehen sind. Ferner ist ersichtlich, dass Merkmale der oberen und unteren Gehäusehälften, wie zum Beispiel die Längs- und Querrippen und/oder die Zugentlastungszähne, ausgetauscht werden können.

## Patentansprüche

1. Elektrische Kabelbaugruppe (100) mit einem Verbinder (6), ausgebildet mit einem Dropabgang (26) zum Anschließen eines Modulwechselrichters (104) einer Photovoltaik-Anlage, umfassend:
zumindest ein elektrisches Kabel (10) mit einem Kabelmantel (12), insbesondere aus einem Kunststoff, welcher keinen Haftverbund mit Vergussmasse oder Umspritzmasse eingeht, z.B. einem vemetzten Kunststoff, und mehreren Adern (14), wobei das Kabel (10) im Bereich des Verbinders (6) abgemantelt und die Adern (14) abisoliert sind, um die Adern (14) an jeweiligen Ader-Verbindungsstellen (29) freizulegen und elektrisch anzuschließen,
zumindest ein erstes und zweites Gehäuseteil (30, 50), welche im montierten Zustand fest zusammengefügt sind und so zusammengefügt ein dielektrisches Verbindergehäuse (8) bilden, welches die Ader-Verbindungsstellen (29) umschließt,
wobei das Verbindergehäuse (8) im montierten Zustand zumindest eine Kabelöffnung (74, 76) aufweist, welche von einer Kabelaufnahmehülse (72) an einer Stirnseite des Verbindergehäuses (8) gebildet wird, welche das Kabel (10) an der Kabelöffnung hülsenförmig umschließt,
wobei eine Dichtung (80) umfasst ist, welche den Kabelmantel (12) gegen die Kabelaufnahmehülse (72) abdichtet,
**dadurch gekennzeichnet, dass** das Verbindergehäuse (8) eine weitere Eintrittsöffnung aufweist, durch welche im montierten Zustand Adern (24) eines Dropabgangs (26) in das Verbindergehäuse (8) eintreten und innerhalb des Verbindergehäuses (8) mit der jeweils zugehörigen Ader (14) des Kabels (10) als T-Abzweig elektrisch verbunden sind,
wobei das Verbindergehäuse (8) Zugentlastungsmittel (48, 68) für das Kabel aufweist, welche im Bereich der Kabelaufnahmehülse (72) an einer Innenseite des ersten und zweiten Gehäuseteils (30, 50) angeformt sind und sich in den Kabelmantel (12) eingraben, wenn das erste und zweite Gehäuseteil (30, 50) fest zusammengefügt sind.

2. Kabelbaugruppe (100) gemäß Anspruch 1,
wobei die Kabelaufnahmehülse (72) im montierten Zustand von einer Stirnseite des Verbindergehäuses (8) nach außen vorspringt, insbesondere um eine externe Kabeltülle (72a) an dem montierten Verbindergehäuse (8) zu bilden.

3. Kabelbaugruppe (100) gemäß einem der Ansprüche 1 oder 2,
wobei die Kabelaufnahmehülse (72) als ein von dem Verbindergehäuse (8) separates Teil ausgebildet ist, weiches an einer Stirnseite des Verbindergehäuses (8) in das erste und/oder zweite Gehäuseteil (30, 50) eingreift, wenn das erste und zweite Gehäuseteil (30, 50) fest zusammengefügt sind.

4. Kabelbaugruppe (100) gemäß Anspruch 3,
wobei die Kabelaufnahmehülse (72) an ihrem Umfang Bohrungen (69) aufweist und sich die Zugentlastungsmittel (48, 68) durch die Bohrungen (69) hindurch nach innen erstrecken, um in den Kabelmantel (12) einzugreifen.

5. Kabelbaugruppe (100) gemäß Anspruch 1,
wobei die Kabelaufnahmehülse (72) von einer ersten Teilschale (44) des ersten Gehäuseteils (30) und einer zweiten Teilschale (64) des zweiten Gehäuseteils (50) gebildet wird.

6. Kabelbaugruppe (100) gemäß Anspruch 5,
wobei zumindest eine Verbindungshülse (70) umfasst ist, welche im montierten Zustand auf die Kabelaufnahmehülse (72) aufgesetzt ist und dabei die erste und zweite Teilschale (44, 64) zu der Kabelaufnahmehülse (72) zusammenpresst und somit das erste und zweite Gehäuseteil (30, 50) zusammengehalten wird,
wobei die Verbindungshülse (70) auf die Kabelaufnahmehülse (72) aufgepresst, aufgerastet oder aufgeschraubt ist.

7. Kabelbaugruppe (100) gemäß Anspruch 5 oder 6,
wobei die Zugentlastungsmittel (48, 68) an der Innenseite (46, 66) der ersten und zweiten Teilschale (44, 64) angeformt sind, um in den Kabelmantel (12) einzugreifen, wenn die erste und zweite Teilschale (44, 64) zusammengepresst werden.

8. Kabelbaugruppe (100) gemäß einem der vorstehenden Ansprüche,
wobei die Dichtung (80) im montierten Zustand des Verbindergehäuses (8) innerhalb der Kabelaufnahmehülse (72) oder innerhalb der Verbindungshülse (70) positioniert ist.

9. Kabelbaugruppe (100) gemäß einem der vorstehenden Ansprüche,
wobei das erste oder zweite Gehäuseteil (50) an seiner Innenseite Längsrippen (60) aufweist, welche zwischen den Längsrippen (60) Kompartimente (61) für die Adern (14) innerhalb des Verbindergehäuses (8) bilden.

10. Kabelbaugruppe (100) gemäß Anspruch 9,
wobei das andere Gehäuseteil (30) an seiner Innenseite Querrippen (40) aufweist, welche im montierten Zustand in einer Richtung quer zum Kabel (10) mit den Längsrippen (60) überlappen, um die Adern (14) einzeln in das jeweils zugehörige Kompartiment (61) zu schieben und im montierten Zustand darin festzuhalten.

11. Kabelbaugruppe (100) gemäß einem der vorstehenden Ansprüche,
wobei das erste oder zweite Gehäuseteil (30, 50) einen quer zu dem Kabel (10) aus dem jeweiligen Gehäuseteil (30, 50) vorspringenden Anschlusszapfen (36) aufweist, welcher die Eintrittsöffnung für die Adern (24) der Stichleitung (26) bildet.

12. Kabelbaugruppe (100) gemäß einem der vorstehenden Ansprüche,
wobei das Verbindergehäuse (8) im montierten Zustand im Wesentlichen vollständig mit einem Kunststoff (90) umspritzt ist und/oder wobei das Verbindergehäuse (8) mit Kunststoff-Vergussmasse ausgefüllt ist.

13. Baugruppe aus einem Modulwechselrichter (104) und der daran mit den Adern (24) des Dropabgangs (26) angeschlossenen Kabelbaugruppe (100) gemäß einem der vorstehenden Ansprüche,
wobei die Kabelbaugruppe (100) an den Modulwechselrichter (104) angeschlossen ist,
wobei das erste oder zweite Gehäuseteil (30, 50) einen quer zu dem Kabel (10) aus dem jeweiligen Gehäuseteil (30, 50) vorspringenden Anschlusszapfen (36) aufweist, welcher eine oder mehrere Eintrittsöffnungen für die Adern (24) des Dropabgangs (26) bildet, und sich in dem montierten Zustand durch eine Öffnung in das Gehäuse (106) des Modulwechselrichters (104) erstreckt, um die Adern (24) des Dropabgangs (26) in den Modulwechselrichter (104) zu führen und dort an den Wechselstromausgang des Modulwechselrichters (104) anzuschließen.

14. Photovoltaik-Anlage mit einer Mehrzahl von Photovoltaik-Modulen (110), welche jeweils einen Modulwechselrichter (104) aufweisen,
wobei jeweils eine Kabelbaugruppe (100) gemäß einem der vorstehenden Ansprüche an die Modulwechselrichter (104) angeschlossen ist, und
wobei die Kabelbaugruppen (100) zu einem Strang zusammengeschaltet sind, um eine Wechselstromverkabelung für die Photovoltaik-Module (110) zu bilden.

15. Verfahren zum Herstellen einer elektrischen Kabelbaugruppe (100) mit einem Verbinder (6), ausgebildet mit einem Dropabgang (26) zum Anschließen eines Modulwechselrichters (104) einer Photovoltaik-Anlage, insbesondere gemäß einem der Ansprüche 1 bis 13, umfassend folgende Schritte:
Bereitstellen eines elektrischen Kabels (10) mit einem Kabelmantel (12), insbesondere aus einem Kunststoff, welcher keinen Haftverbund mit Vergussmasse oder Umspritzmasse eingeht, z.B. einem vernetzten Kunststoff, und mit mehreren Adern (14) mit Aderisolierungen (16),
Bereitstellen eines ersten und zweiten miteinander paarbaren Gehäuseteils (30, 50) mit Zugentlastungsmitteln (48, 68) für das Kabel (10),
Abmanteln eines Abschnitts (18) des Kabelmantels (12),
partiell Entfernen der Aderisolierungen (16) im Bereich der Abmantelung (18), um die Adern (14) freizulegen,
Bereitstellen einer Dropleitung mit Adern (24),
Abisolieren der Adern (24) der Dropleitung,
elektrisches Anschließen der Adern (24) der Dropleitung an die freigelegten Adern (14) des elektrischen Kabels (10) zum Herstellen von Ader-Verbindungsstellen (29),
Einfügen des Kabels (10) im Bereich der Ader-Verbindungsstellen (29) in den ersten oder zweiten Gehäuseteil (30, 50),
Aufsetzen des anderen Gehäuseteils (30, 50) und Zusammenfügen des ersten und zweiten Gehäuseteils (30, 50), um so ein dielektrisches Verbindergehäuse (8) zu bilden, welches die Ader-Verbindungsstellen (29) umschließt, wobei sich die Zugentlastungsmittel (48, 68) in den Kabelmantel (12) eingraben, wenn das erste und zweite Gehäuseteil (30, 50) zusammengepresst werden,
wobei beidseits des Verbindergehäuses (8) jeweils eine Dichtung (80) auf den Kabelmantel (12) aufgesetzt und beidseits der Ader-Verbindungsstellen (29) positioniert wird und wobei Verbindungshülsen (70) oder Kabelaufnahmehülsen (72) auf die Dichtungen (80) geschoben werden, so dass im montierten Zustand die Dichtungen (80) innen gegen den Kabelmantel (12) und außen gegen die zugehörige Verbindungshülse (70) oder die zugehörige Kabelaufnahmehülse (72) abdichten.

## Claims

1. An electrical cable assembly (100) with a connector (6), configured with a drop line for connecting a module inverter (104) of a photovoltaic system, comprising:
at least one electrical cable (10) comprising a cable jacket (12), in particular made of a plastic material which does not form an adhesive bond with potting compound or overmoulding compound such as a crosslinked plastic material, and comprising a plurality of wires (14), wherein the cable (10) is stripped in the vicinity of the connector (6) and the wires (14) are stripped to expose and electrically connect the wires (14) at respective wire connection points (29);
at least a first and a second housing part (30, 50), which in the assembled state are firmly joined together and in the so joined state define a dielectric connector housing (8) enclosing the wire connection points (29);
wherein, in the assembled state, the connector housing (8) has at least one cable opening (74, 76) which is defined by a cable receiving sleeve (72) on an end face of the connector housing (8), which encloses the cable (10) at the cable opening like a sleeve;
comprising a gasket (80) which seals the cable jacket (12) against the cable receiving sleeve (72);
**characterised in that**
the connector housing (8) has a further inlet opening through which, in the assembled state, wires (24) of a drop line (26) enter the connector housing (8) and are electrically connected, inside the connector housing (8), to the respectively associated wire (14) of the cable (10) in the form of a tee branch;
wherein the connector housing (8) comprises strain relief means (48, 68) for the cable which are formed integrally with an inner surface of the first and second housing parts (30, 50) in the vicinity of the cable receiving sleeve (72) and dig into the cable jacket (12) when the first and second housing parts (30, 50) are firmly joined together,

2. The cable assembly (100) according to claim 1,
wherein, in the assembled state, the cable receiving sleeve (72) projects outwards from an end face of the connector housing (8), in particular in order to form an external cable grommet (72a) on the assembled connector housing (8).

3. The cable assembly (100) according to any one of claims 1 or 2,
wherein the cable receiving sleeve (72) is formed as a separate part from the connector housing (8), which is engaged in the first and/or second housing parts (30, 50) at an end face of the connector housing (8) when the first and second housing parts (30, 50) are firmly joined together.

4. The cable assembly (100) according to claim 3,
wherein the cable receiving sleeve (72) has bores (69) along a circumference thereof, and wherein the strain relief means (48, 68) extend inwards through the bores (69) to dig into the cable jacket (12).

5. The cable assembly (100) according to claim 1,
wherein the cable receiving sleeve (72) is defined by a first half-shell (44) of the first housing part (30) and a second half-shell (64) of the second housing part (50).

6. The cable assembly (100) according to claim 5,
comprising at least one joining sleeve (70) which in the assembled state is fitted on the cable receiving sleeve (72) thereby pressing together the first and second half-shells (44, 64) so as to form the cable receiving sleeve (72) and thus holding together the first and second housing parts (30, 50),
wherein the joining sleeve (70) is press-fitted, latched, or screwed onto the cable receiving sleeve (72).

7. The cable assembly (100) according to claim 5 or 6,
wherein the strain relief means (48, 68) are integrally formed with the inner surface (46, 66) of the first and second half-shells (44, 64) so as to engage in the cable jacket (12) when the first and second half-shelts (44, 64) are pressed together.

8. The cable assembly (100) according to any one of the preceding claims,
wherein, in the assembled state of the connector housing (8), the gasket (80) is disposed inside the cable receiving sleeve (72) or inside the joining sleeve (70).

9. The cable assembly (100) according to any one of the preceding claims,
wherein the first or second housing part (50) has longitudinal ribs (60) on its inner surface, which define compartments (61) for the wires (14) inside the connector housing (8) between the longitudinal ribs (60).

10. The cable assembly (100) according to claim 9,
wherein the other housing part (30) has transverse ribs (40) on its inner surface, which in the assembled state overlap with the longitudinal ribs (60) in a direction transverse to the cable (10) so as to individually urge the wires (14) into the respective associated compartment (61) and to retain them therein in the assembled state.

11. The cable assembly (100) according to any one of the preceding claims,
wherein the first or second housing part (30, 50) has a connection sleeve (36) projecting from the respective housing part (30, 50) transversely to the cable (10), which connection sleeve defines the inlet opening for the wires (24) of the drop line (26).

12. The cable assembly (100) according to any one of the preceding claims,
wherein, in the assembled state, the connector housing (8) is substantially completely overmoulded by a plastic material (90), and/or wherein the connector housing (8) is filled with plastic potting compound.

13. An assembly comprising a module inverter (104) and the cable assembly (100) according to any one of the preceding claims connected thereto through the wires (24) of the drop line (26);
wherein the cable assembly (100) is connected to the module inverter (104);
wherein the first or second housing part (30, 50) has a connection sleeve (36) projecting from the respective housing part (30, 50) transversely to the cable (10), which connection sleeve defines one or more inlet openings for the wires (24) of the drop line (26) and, in the assembled state, extends through an opening into the housing (106) of the module inverter (104) to lead the wires (24) of the drop line (26) into the module inverter (104) for being connected there to the AC output of the module inverter (104).

14. A photovoltaic system comprising a plurality of photovoltaic modules (110) each including a module inverter (104);
wherein the module inverters (104) have a respective cable assembly (100) according to any one of the preceding claims connected thereto; and
wherein the cable assemblies (100) are interconnected into a string to form an AC cabling for the photovoltaic modules (110).

15. A method for producing an electrical cable assembly (100) with a connector (6), which is configured with a drop line (26) for connecting a module inverter (104) of a photovoltaic system, in particular according to any one of claims 1 to 13, comprising the steps of:
providing an electrical cable (10) comprising a cable jacket (12), in particular made of a plastic material, which does not form an adhesive bond with potting compound or overmoulding compound such as a crosslinked plastic material, and comprising a plurality of wires (14) with wire insulations (16);
providing first and second mateable housing parts (30, 50) with strain relief means (48, 68) for the cable (10);
stripping a portion (18) of the cable jacket (12);
partially removing the wire insulations (16) in the vicinity of the stripped jacket (18) in order to expose the wires (14);
providing a drop line with wires (24);
stripping the wires (24) of the drop line;
electrically connecting the wires (24) of the drop line to the exposed wires (14) of the electrical cable (10) to produce wire connection points (29);
inserting the portion of the cable (10) including the wire connection points (29) into the first or second housing part (30, 50);
placing the other housing part (30, 50) thereon and joining together the first and second housing parts (30, 50) so as to form a dielectric connector housing (8) which encloses the wire connection points (29), wherein the strain relief means (48, 68) dig into the cable jacket (12) when the first and second housing parts (30, 50) are firmly pressed together,
wherein a respective gasket (80) is fitted onto the cable jacket (12) on either side of the connector housing (8) and is placed on either side of the wire connection points (29), and wherein joining sleeves (70) or cable receiving sleeves (72) are slidingly fitted over the gaskets (80) so that in the assembled state the gaskets (80) seal against the cable jacket (12) on the inner side and against the associated joining sleeve (70) or the associated cable receiving sleeve (72) on the outer side.

## Revendications

1. Ensemble de câbles électriques (100) doté d'un connecteur (6) réalisé avec une sortie drop (26) destinée au raccordement d'un onduleur modulaire (104) d'une installation photovoltaïque, comprenant :
au moins un câble électrique (10) comportant une gaine de câble (12), notamment en matière plastique qui n'entre pas en liaison par adhérence avec une masse de scellement ou une masse d'enrobage par injection, par exemple une matière plastique réticulée, et plusieurs brins (14), la gaine du câble (10) étant retirée dans la région du connecteur (6), et les brins (14) étant dénudés afin de dégager les brins (14) aux emplacements de connexion de brins (29) respectifs et de les raccorder électriquement,
au moins une première et une deuxième partie de boîtier (30, 50) qui sont assemblées solidement à l'état monté et, ainsi assemblées, forment un boîtier de connecteur (8) diélectrique qui entoure les emplacements de connexion de brins (29),
le boîtier de connecteur (8) présentant, à l'état monté, au moins une ouverture de câble (74, 76) qui est formée par un manchon de réception de câble (72) sur une face frontale du boîtier de connecteur (8), qui entoure le câble (10) sous forme de manchon sur l'ouverture de câble,
un joint d'étanchéité (80) étant prévu, qui établit l'étanchéité de la gaine de câble (12) vis-à-vis du manchon de réception de câble (72),
**caractérisé en ce que**
le boîtier de connecteur (8) présente une autre ouverture d'entrée à travers laquelle, à l'état monté, des brins (24) d'une sortie drop (26) pénètrent dans le boîtier de connecteur (8) et sont reliés électriquement, à l'intérieur du boîtier de connecteur (8), au brin (14) respectivement associé du câble (10), sous forme de dérivation en T,
le boîtier de connecteur (8) présentant des moyens de décharge de traction (48, 68) pour le câble, qui sont formés dans la région du manchon de réception de câble (72), sur une face interne de la première et de la deuxième partie de boîtier (30, 50), et s'enfoncent dans la gaine de câble (12) lorsque la première et la deuxième partie de boîtier (30, 50) sont solidement assemblées.

2. Ensemble de câbles (100) selon la revendication 1,
dans lequel, à l'état monté, le manchon de réception de câble (72) fait saillie vers l'extérieur à partir d'une face frontale du boîtier de connecteur (8), notamment pour former un passe-câble (72a) externe sur le boîtier de connecteur (8) assemblé.

3. Ensemble de câbles (100) selon l'une des revendications 1 ou 2,
dans lequel le manchon de réception de câble (72) est réalisé sous la forme d'une pièce séparée du boîtier de connecteur (8), qui s'engage dans la première et/ou la deuxième partie de boîtier (30, 50), sur une face frontale du boîtier de connecteur (8), lorsque les première et deuxième parties de boîtier (30, 50) sont solidement assemblées.

4. Ensemble de câbles (100) selon la revendication 3,
dans lequel le manchon de réception de câble (72) présente des trous (69) sur son pourtour, et les moyens de décharge de traction (48, 68) s'étendent vers l'intérieur à travers les trous (69), afin de pénétrer dans la gaine de câble (12).

5. Ensemble de câbles (100) selon la revendication 1,
dans lequel le manchon de réception de câble (72) est formé par une première coque partielle (44) de la première partie de boîtier (30) et par une deuxième coque partielle (64) de la deuxième partie de boîtier (50).

6. Ensemble de câbles (100) selon la revendication 5,
dans lequel il est prévu au moins un manchon d'assemblage (70) qui, à l'état monté, est rapporté sur le manchon de réception de câble (72), en pressant la première et la deuxième coque partielle (44, 64) pour former le manchon de réception de câble (72), maintenant ainsi ensemble la première et la deuxième partie de boîtier (30, 50).

7. Ensemble de câbles (100) selon la revendication 5 ou 6,
dans lequel les moyens de décharge de traction (48, 68) sont formés sur la face interne (46, 66) de la première et de la deuxième coque partielle (44, 64) pour pénétrer dans la gaine de câble (12) lorsque la première et la deuxième coque partielle (44, 64) sont pressées l'une contre l'autre.

8. Ensemble de câbles (100) selon l'une des revendications précédentes,
dans lequel, à l'état monté du boîtier de connecteur (8), le joint d'étanchéité (80) est placé à l'intérieur du manchon de réception de câble (72) ou à l'intérieur du manchon d'assemblage (70).

9. Ensemble de câbles (100) selon l'une des revendications précédentes,
dans lequel la première ou la deuxième partie de boîtier (50) présente sur sa face interne des nervures longitudinales (60) qui forment, entre les nervures longitudinales (60), des compartiments (61) pour les brins (14), à l'intérieur du boîtier de connecteur (8).

10. Ensemble de câbles (100) selon la revendication 9,
dans lequel l'autre partie de boîtier (30) présente sur sa face interne des nervures transversales (40) qui, à l'état monté, se chevauchent avec les nervures longitudinales (60) dans une direction transversale au câble (10), afin de glisser les brins (14) individuellement dans le compartiment (61) respectif associé et de les y maintenir à l'état monté.

11. Ensemble de câbles (100) selon l'une des revendications précédentes,
dans lequel la première ou la deuxième partie de boîtier (30, 50) présente un tenon de raccordement (36) qui fait saillie transversalement au câble (10), à partir de la partie de boîtier (30, 50) respective, et qui forme l'ouverture d'entrée pour les brins (24) de la ligne de dérivation (26).

12. Ensemble de câbles (100) selon l'une des revendications précédentes,
dans lequel le boîtier de connecteur (8), à l'état monté, est enrobé de manière sensiblement complète par injection avec une matière plastique (90) et/ou dans lequel le boîtier de connecteur (8) est rempli avec une masse de scellement en matière plastique.

13. Module constitué d'un onduleur modulaire (104) et de l'ensemble de câbles (100) selon l'une des revendications précédentes, connecté à l'onduleur avec les brins (24) de la sortie drop (26),
dans lequel l'ensemble de câbles (100) est raccordé à l'onduleur modulaire (104),
dans lequel la première ou la deuxième partie de boîtier (30, 50) présente un tenon de raccordement (36) qui fait saillie transversalement au câble (10), à partir de la partie de boîtier (30, 50) respective, et qui forme une ou plusieurs ouvertures d'entrée pour les brins (24) de la sortie drop (26), et qui, à l'état monté, s'étend à travers une ouverture dans le boîtier (106) de l'onduleur modulaire (104), afin de guider les brins (24) de la sortie drop (26) vers l'intérieur de l'onduleur modulaire (104) et de les raccorder dans celui-ci à la sortie de courant alternatif de l'onduleur modulaire (104).

14. Installation photovoltaïque comprenant une pluralité de modules photovoltaïques (110) qui présentent chacun un onduleur modulaire (104),
dans lequel respectivement un ensemble de câbles (100) selon l'une des revendications précédentes est raccordé aux onduleurs modulaires (104), et
dans lequel les ensembles de câbles (100) sont interconnectés en faisceau pour constituer un câblage à courant alternatif pour les modules photovoltaïques (110).

15. Procédé de fabrication d'un ensemble de câbles électriques (100) doté d'un connecteur (6) réalisé avec une sortie drop (26) destinée au raccordement d'un onduleur modulaire (104) d'une installation photovoltaïque, notamment selon l'une des revendications 1 à 13, comprenant les étapes suivantes :
préparation d'un câble (10) électrique comportant une gaine de câble (12), notamment en matière plastique qui n'entre pas en liaison par adhérence avec une masse de scellement ou une masse d'enrobage par injection, par exemple une matière plastique réticulée, et comportant plusieurs brins (14) dotés d'isolations de brins (16),
préparation d'une première et d'une deuxième partie de boîtier (30, 50) pouvant être appariées l'une à l'autre et dotées de moyens de décharge de traction (48, 68) pour le câble (10),
retrait d'une portion (18) de la gaine de câble (12),
élimination partielle des isolations de brins (16) dans la région de la portion de retrait de gaine (18), afin de dégager les brins (14),
préparation d'une ligne drop avec des brins (24),
dénudage des brins (24) de la ligne drop,
raccordement électrique des brins (24) de la ligne drop aux brins (14) dégagés du câble (10) électrique, aux fins de réaliser des emplacements de connexion de brins (29),
insertion du câble (10) dans la première ou la deuxième partie de boîtier (30, 50), dans la région des emplacements de connexion de brins (29),
mise en place de l'autre partie de boîtier (30, 50) et assemblage des première et deuxième parties de boîtier (30, 50) pour former ainsi un boîtier de connecteur (8) diélectrique qui entoure les emplacements de connexion de brins (29), les moyens de décharge de traction (48, 68) s'enfonçant dans la gaine de câble (12) lorsque les première et deuxième parties de câble (30, 50) sont pressées l'une contre l'autre,
un joint d'étanchéité (80) étant rapporté sur la gaine de câble (12), respectivement de part et d'autre du connecteur (8), et étant positionné de part et d'autre des emplacements de connexion de brins (29), et des manchons d'assemblage (70) ou des manchons de réception de câble (72) étant glissés sur les joints d'étanchéité (80), de sorte qu'à l'état monté, les joints (80) établissent l'étanchéité à l'intérieur, vis-à-vis de la gaine de câble (12), et à l'extérieur, vis-à-vis du manchon d'assemblage (70) associé ou du manchon de réception de câble (72) associé.
